# EUROPEAN PATENT SPECIFICATION

(11) **EP 3 780 708 B1**
(45) Date of publication and mention of the grant of the patent: **19.04.2023**
(21) Application number: 18922677.2
(22) Date of filing: 15.06.2018
(51) Int. Cl.: H04W 24/10, H04W 74/08

(54) **METHOD FOR REPORTING MEASUREMENT INFORMATION, METHOD FOR CONFIGURING TERMINAL DEVICE, AND DEVICE**
VERFAHREN ZUM MELDEN VON MESSINFORMATIONEN, VERFAHREN ZUR KONFIGURATION EINES ENDGERÄTES UND VORRICHTUNG
PROCÉDÉ DE RAPPORT D'INFORMATIONS DE MESURE, PROCÉDÉ DE CONFIGURATION DE DISPOSITIF TERMINAL, ET DISPOSITIF

(43) Date of publication of application: 17.02.2021
(73) Proprietor: GUANGDONG OPPO MOBILE TELECOMMUNICATIONS CORP., LTD., Wusha, Chang'an Dongguan Guangdong 523860 (CN)
(72) Inventor: YANG, Ning, Dongguan, Guangdong 523860 (CN)
(74) Representative: Penza, Giancarlo
(86) International application number: PCT/CN2018/091516
(87) International publication number: WO 2019/237338

(56) References cited:
- EP-A1- 2 624 617
- WO-A1-2018/063437
- CN-A- 102 300 246
- CN-A- 106 535 223
- CN-A- 108 156 670
- CN-B- 103 518 400
- ERICSSON: "Faster measurements and signaling for Ultra reliable mobility", 3GPP DRAFT; R2-1700921 - FASTER MEASUREMENTS AND SIGNALING FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Athens, Greece; 20170213 - 20170217 4 February 2017 (2017-02-04), XP051223308, Retrieved from the Internet: URL:http://www.3gpp.org/ftp/tsg_ran/WG2_RL 2/TSGR2_97/Docs/ [retrieved on 2017-02-04]
- NOKIA ALCATEL-LUCENT SHANGHAI BELL: "Considerations on fast access inter-site small cells in NR", 3GPP DRAFT; R2-167545_FAST INTER SITE SMALL CELLS NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051177429, Retrieved from the Internet: URL:http://www.3gpp.org/ftp/Meetings_3GPP_ SYNC/RAN2/Docs/ [retrieved on 2016-11-13]
- OPPO: "Measurement configuration enhancement to enable faster SN addition for EN-DC", 3GPP DRAFT; R2-1711479 MEASUREMENTS CONFIGURATION ENHANCEMENT TO ENABLE FASTER SN ADDITION FOR EN-DC, 3RD GENERATION PARTNERSHIP PROJECT (3GPP), MOBILE COMPETENCE CENTRE ; 650, ROUTE DES LUCIOLES ; F- , vol. RAN WG2, no. Prague, Czech Republic; 20171009 - 20171013 8 October 2017 (2017-10-08), XP051343454, Retrieved from the Internet: URL:http://www.3gpp.org/ftp/Meetings_3GPP_ SYNC/RAN2/Docs/ [retrieved on 2017-10-08]
- ERICSSON: "Faster Measurements and Signaling for Ultra Reliable Mobility", 3GPP TSG-RAN WG2 #97 R2-1700921, 4 February 2017 (2017-02-04), XP051223308,
- NOKIA ET AL: "Remaining Stage-2 aspects of IDLE mode measurements", 3GPP DRAFT; R2-1802751 REMAINING STAGE-2 ASPECTS OF IDLE MODE MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Athens, Greece; 20180226 - 20180302 16 February 2018 (2018-02-16), XP051400234, Retrieved from the Internet: URL:http://www.3gpp.org/ftp/tsg%5Fran/WG2% 5FRL2/TSGR2%5F101/Docs/ [retrieved on 2018-02-16]
- NOKIA ET AL: "Remaining Stage-3 aspects of IDLE mode measurements", 3GPP DRAFT; R2-1802752 REMAINING STAGE-3 ASPECTS OF IDLE MODE MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Athens, Greece; 20180226 - 20180302 16 February 2018 (2018-02-16), XP051400235, Retrieved from the Internet: URL:http://www.3gpp.org/ftp/tsg%5Fran/WG2% 5FRL2/TSGR2%5F101/Docs/ [retrieved on 2018-02-16]

## Description

### Technical Field

Embodiments of the present invention relate to a field of communication, and more specifically, to a method for reporting measurement information, a method and device for configuring a terminal device.

### Background

With people's pursuit of speed, delay, high-speed mobility and energy efficiency, and diversity and complexity of business in a future life, a 3rd Generation Partnership Project (3GPP) international standards organization begins to develop a fifth Generation (5-Generation, 5G) mobile communication technology.

During an early deployment of New Radio (NR), a complete NR coverage is difficult to obtain, so a typical network coverage is a wide-area Long Term Evolution (LTE) coverage and an NR island coverage mode. Moreover, as a large amount of LTE is deployed below 6GHz, there are few spectrums below 6GHz that may be used for the 5G. Therefore, a spectrum application above 6GHz must be studied for the NR. However, in a high frequency band, the coverage is limited and a signal fades fast. In existing art, a working mode of tight interworking between the LTE and the NR is proposed so as to protect previous investments in LTE of mobile operators. Specifically, an LTE-NR Dual Connection (DC) is supported by band combination for transmitting data, that is, there is a coverage of another Slave Node (SN) under a coverage of a Master Node (MN), which improves system throughput.

However, addition of an SN node is usually based on a measurement result reported by a UE, and the reporting of the measurement result needs to be after a security activation. Therefore, in general, the UE will firstly enter a non-DC mode, and then establish a bearer. If the measurement result meets a requirement of the addition of the SN, the UE will perform reconfiguration through an RRC connection to enter a DC mode, that is, additional RRC signaling is needed for adding an SN node, which increases signaling overhead and involves a change of bearer type, possibly resulting in data loss and the like due to the bearer change.

The document, R2-1700921 (ERICSSON: "Faster measurements and signaling for Ultra reliable mobility") discloses technologies of RRC measurement configurations for different measurement periods for both intra and inter frequency handover. This allows both faster measurements for some UEs which need to react fast and also slower measurement periods for other UEs which may need to save battery etc. The fast measurement is triggered and which measurement period to use is informed to the UE in the random access procedure.

The document, R2-167545 (NOKIA ALCATEL-LUCENT SHANGHAI BELL: "Considerations on fast access inter-site small cells in NR") discloses a proposal 2 that the UE can be indicated an inter-frequency carrier to measure during the idle/inactive state for potential small cells. UE can then report the measurements immediately upon state transition to RRC connected.

The document, R2-1711479 (OPPO: "Measurement configuration enhancement to enable faster SN addition for EN-DC") discloses technologies of measurement configuration enhancement to enable more efficient utilization of EN-DC. In proposal 1, when UE moves from IDLE to CONNECTED, the enhanced UE measurement mode and corresponding configuration in IDLE state should be considered. In proposal 2, new measurement mode configuration to be used along with IDLE and CONNECTED mode measurement configurations should be introduced to support more accurate RRM measurements. In proposal 3, UE is allowed to provide available measurement information based on the enhanced IDLE mode measurement configuration immediately after it has received RRCConnectionConfiguration or RRCConnectionResume and if fast measurement indication was included.

EP 2624617 A1 discloses a method and system for reporting additional measurement results, which method comprises: a base station notifying a terminal of whether or not the terminal should report an additional measurement result; the terminal ranking a plurality of cells at a current frequency according a predetermined ranking mode in accordance with the notification of the base station and selecting the optimal cell at the current frequency according to the ranking result to report the additional measurement result, which enables the base station to control whether the terminal reports the additional measurement results.

CN106535223A discloses a cell measurement method and a mobile terminal. The method comprises the following steps: step S1, in a current measurement period, measuring all adjacent cells associated with a current service cell, and sorting all adjacent cells from high to low according to the signal quality of each adjacent cell; step S2, according to a sorting result in step S1, selecting first N adjacent cells as cells to be measured; step S3, in a next measurement period, measuring all cells to be measured, and then turning to step S5; step S4, in a next expected measurement period, only measuring all cells to be measured, and returning to step S 1 at the end of the expected measurement period; and step S5, according to an average difference value between the signal quality associated with the cells to be measured in two continuous measurement periods, judging whether or not the cells to be measured are in a static state, and returning to step S4 when the cells to be measured are in a static state.

### Summary

The invention is defined by the appended claims.

There is provided a method for reporting measurement information, a method and device for configuring a terminal device, as defined in the appended claims, so that when the terminal device in an idle state or an inactive state enters a dual connection mode, signaling overhead may be effectively saved, and data loss caused by a change of bearing type may be avoided.

The present disclosure also discloses, in a first aspect, a method for reporting measurement information, applied to a terminal device in an idle state or an inactive state, including:
measuring, by the terminal device, signal quality of at least one cell; and
reporting, by the terminal device, measurement information according to the signal quality of each cell in the at least one cell.

Before the terminal device measures the signal quality of at least one cell, the method further includes:
receiving, by the terminal device, first indication information broadcasted by a network device; and
determining, by the terminal device, the at least one cell according to the first indication information;
wherein, the first indication information includes:
   an identifier of at least one cell group to which the at least one cell belongs, an identifier of the at least one cell, a measurement frequency and a subcarrier spacing, wherein a cell group is a cell group in dual connection network architecture.

In some possible implementation modes, reporting, by the terminal device, the measurement information according to the signal quality of each cell of the at least one cell, includes:
determining, by the terminal device, a threshold value; and
generating, by the terminal device, the measurement information according to whether the signal quality of each cell meets the threshold value, and reporting the measurement information.

In some possible implementation modes, the measurement information includes an identifier of a target cell group and/or an identifier of a target cell, wherein each target cell group at least includes one cell meeting the threshold value, and the target cell is a cell meeting the threshold value in the at least one cell.

In some possible implementation modes, the measurement information includes second indication information, wherein the second indication information is used for indicating whether the signal quality of each cell meets the threshold value.

In some possible implementation modes, the second indication information includes:
at least one bit sequence, wherein a first bit sequence in the at least one bit sequence is used for indicating whether the signal quality of each cell in the first cell group in the at least one cell group meets the threshold value.

In some possible implementation modes, each bit sequence in the at least one bit sequence at least has one bit for indicating that the signal quality of a cell meets the threshold value.

In some possible implementation modes, the second indication information further includes:
a correspondence relationship between the first bit sequence and an identifier of the first cell group.

In some possible implementation modes, the first bit sequence includes a first value and/or a second value, wherein the first value is used for indicating that the signal quality of a cell does not meet the threshold value, and the second value is used for indicating that the signal quality of a cell meets the threshold value.

In some possible implementation modes, the first value is 0 and the second value is 1.

In some possible implementation modes, before reporting, by the terminal device, the measurement information according to the signal quality of each cell in the at least one cell, the method further includes:
receiving, by the terminal device, a threshold value broadcasted by the network device.

In some possible implementation modes, the threshold value is a preconfigured threshold value.

In some possible implementation modes, the threshold value includes:
a Reference Signal Received Power (RSRP) threshold and/or a Reference Signal Received Quality (RSRQ) threshold.

In some possible implementation modes, reporting, by the terminal device, the measurement information according to the signal quality of each cell in the at least one cell, includes:
reporting, by the terminal device, the signal quality of each cell to the network device according to an order of the signal quality from high to low.

In some possible implementation modes, reporting, by the terminal device the measurement information according to the signal quality of each of the above at least one cell, includes:
carrying, by the terminal device, the measurement information in a message 5, MSG5, or a security mode command or a measurement report, and reporting the measurement information to the network device.

In some possible implementation modes, before reporting, by the terminal device, the measurement information according to the signal quality of each cell in the above at least one cell, the method further includes:
sending, by the terminal device, third indication information to the network device, wherein the third indication information is used for indicating that the terminal device carries the measurement information in a message 5, MSG5, or a security mode command or a measurement report and report the measurement information to the network device.

In some possible implementation modes, sending, by the terminal device, the third indication information to the network device includes:
sending, by the terminal device, a message 3, MSG3, to the network device, wherein the MSG3 includes the third indication information.

The present disclosure also discloses, in a second aspect, a method for configuring a terminal device, including:
receiving, by the network device, measurement information sent by a terminal device, wherein the measurement information is information generated according to signal quality of each cell in at least one cell by the terminal device in an idle state or an inactive state; and
configuring, by the network device, a secondary network device and/or a secondary serving cell for the terminal device according to the measurement information.

Before receiving, by the network device, the measurement information sent by the terminal device, the method further includes:
broadcasting, by the network device, first indication information to the terminal device in an idle state or an inactive state, wherein the first indication information is used by the terminal device to determine the at least one cell;
wherein, the first indication information includes:
   an identifier of at least one cell group to which the at least one cell belongs, an identifier of the at least one cell, a measurement frequency and a subcarrier spacing, wherein a cell group is a cell group in dual connection network architecture.

In some possible implementation modes, before receiving, by the network device, the measurement information sent by the terminal device, the method further includes:
broadcasting, by the network device, a threshold value to the terminal device, wherein the threshold value is used by the terminal device to generate the measurement information according to whether the signal quality of each cell meets the threshold value.

In some possible implementation modes, the measurement information includes an identifier of a target cell group and/or an identifier of a target cell, wherein each target cell group at least includes one cell meeting a threshold value, and the target cell is a cell meeting the threshold value in the at least one cell.

In some possible implementation modes, the measurement information includes second indication information, wherein the second indication information is used for indicating whether the signal quality of each cell meets the threshold value.

In some possible implementation modes, the second indication information includes:
at least one bit sequence, wherein a first bit sequence in the at least one bit sequence is used for indicating whether the signal quality of each cell in a first cell group in the at least one cell group meets the threshold value.

In some possible implementation modes, each bit sequence in the at least one bit sequence at least includes one bit for indicating that the signal quality of a cell meets the threshold value.

In some possible implementation modes, the second indication information further includes:
a correspondence relationship between the first bit sequence and an identifier of the first cell group.

In some possible implementation modes, the first bit sequence includes a first value and/or a second value, wherein the first value is used for indicating that the signal quality of a cell does not meet the threshold value, and the second value is used for indicating that the signal quality of a cell meets the threshold value.

In some possible implementation modes, the first value is 0 and the second value is 1.

In some possible implementation modes, the threshold value includes:
a Reference Signal Received Power (RSRP) threshold and/or a Reference Signal Received Quality (RSRQ) threshold.

In some possible implementation modes, receiving, by the network device, the measurement information sent by the terminal device includes:
receiving, by the network device, the signal quality of each cell reported by the terminal device according to an order of signal quality from high to low.

In some possible implementation modes, receiving, by the network device, the measurement information sent by the terminal device includes:
receiving, by the network device, the measurement information carried in a message 5, MSG5, or a security mode command or a measurement report sent by the terminal device.

In some possible implementation modes, before receiving, by the network device, the measurement information sent by the terminal device, the method further includes:
receiving, by the network device, third indication information sent by the terminal device, wherein the third indication information is used for indicating that the terminal device carries the measurement information in a message 5, MSG5, or a security mode command or a measurement report and report measurement information to the network device.

In some possible implementation modes, receiving, by the terminal device, the third indication information sent by the network device includes:
receiving, by the network device, the message 3, MSG3, sent by the terminal device, wherein the MSG3 includes the third indication information.

The present disclosure also discloses, in a third aspect, a communication device for executing the method of any one of the first aspect to the second aspect or the method of any one of the above possible implementation modes thereof.

In some possible implementation modes, the communication device includes:
a function module, configured to execute the method of any one of the first aspect to the second aspect or the method of any one of the above possible implementation modes thereof.

In some possible implementation modes, the communication device is a terminal device, and the terminal device is configured to execute the method of the first aspect or any one of the above possible implementation modes of the first aspect.

In some possible implementation modes, the communication device is a network device, and the network device is configured to execute the method of the second aspect or any one of the above possible implementation modes of the second aspect.

The present disclosure also discloses, in a fourth aspect, a communication device, including:
a processor, configured to call and run a computer program from a memory, wherein the computer program is used for executing the method of any one of the first aspect to the second aspect or the method of any one of the above possible implementation modes thereof.

In some possible implementation modes, the communication device further includes:
the memory, configured to store the computer program.

In some possible implementation modes, the communication device is a terminal device, wherein the terminal device is configured to execute the method of the first aspect or any one of the above possible implementation modes of the first aspect.

In some possible implementation modes, the communication device is a network device, wherein the network device is used to execute the method of the second aspect or any one of the above possible implementation modes of the second aspect.

The present disclosure also discloses, in a fifth aspect, a chip, for executing the method in any one of the first aspect to the second aspect or the method of any one of the above possible implementation modes thereof.

In some possible implementation modes, the chip further includes:
a processor, configured to call and run a computer program from a memory, wherein the computer program is used for executing the method of any one of the first aspect to the second aspect or the method of any one of the above possible implementation modes thereof.

In some possible implementation modes, the chip further includes:
the memory, configured to store the computer program.

The present disclosure also discloses, in a sixth aspect, a computer-readable storage medium for storing a computer program, wherein the computer program is used for executing the method of any one of the first aspect to the second aspect or the method of any one of the above possible implementation modes thereof.

The present disclosure also discloses, in a seventh aspect, a computer program product including computer program instructions, wherein the computer program is used for executing the method of any one of the first aspect to the second aspect or the method of any one of the above possible implementation modes thereof.

The present disclosure also discloses, in an eighth aspect, a computer program, which, when run on a computer, causes the computer to execute the method of any one of the first aspect to the second aspect or the method of any one of the above possible implementation modes thereof.

The present disclosure also discloses, in a ninth aspect, a communication system, including:
a terminal device in an idle state or an inactive state and a network device;
wherein, the terminal device is configured to: measure signal quality of at least one cell; and report measure information according to the signal quality of each cell in the at least one cell; and
the network device is configured to: receive measurement information sent by the terminal device; and configure a secondary network device and/or a secondary serving cell for the terminal device according to the measurement information.

In some possible implementation modes, the terminal device is configured to execute the method of the first aspect or any one of the above possible implementation modes thereof, and the network device is configured to execute the method of the second aspect or any one of the above possible implementation modes thereof.

In an implementation of the present application, a terminal device in an idle state or an inactive state directly measures signal quality of a cell and reports the measurement information, which avoids a situation that a terminal device enters an active state first, and then a network device configures a secondary network device or a secondary serving cell for the terminal device based on a reported measurement result and an established bearer, thus effectively reducing delay and reducing signaling overhead at the same time.

Further, the network device broadcasts measurement demand information, i.e., a cell group that the terminal device needs to measure, to the terminal device through broadcasting, thereby realizing that the terminal reports the measure information and the network device configures the terminal device. Thus, when a terminal device in an idle state or an inactive state enters a dual connection mode, compared with the situation that a network device first enters a non-DC mode, establishes a bearer, and then performs reconfiguration through an RRC connection to enter a DC mode in the prior art, the signaling overhead may be effectively saved.

Further, the network device may implement that the terminal device reports the measurement information and the network device configures the terminal device by means of the signaling existing in a competitive random access procedure. Thus, when the terminal device in the idle state or the inactive state enters the dual connection mode, signaling overhead may be effectively saved, and data loss caused by the change of the bearer type may be avoided.

In conclusion, in an implementation of the preset application, a UE in an idle state or an inactive state is configured with the first indication information, and the UE reports the measurement information before a dedicated bearer is established, which is used for assisting a network to configure DC and selecting an SN node. A purpose of quickly entering the DC mode is achieved, usage of extra RRC signaling for the addition of an SN node is avoided, and a purpose of saving signaling is achieved, and the change of bearer type is not involved and an influence of data loss caused by the change of bearer is avoided.

### Brief Description of Drawings

FIG. 1 is an example of an application scenario of an implementation of the present invention.
FIG. 2 is an example of an EN-DC overall networking architecture of an implementation of the present invention.
FIG. 3 is a schematic block diagram of MN and SN under dual connection of an implementation of the present invention.
FIG. 4 is a schematic flow chart of a competitive random access of an implementation of the present invention.
FIG. 5 is a schematic flow chart of reporting measurement information of an implementation of the present invention.
FIG. 6 is a schematic flow chart of configuring a terminal device of an implementation of the present invention.
FIG. 7 is a schematic block diagram of a terminal device of an implementation of the present invention.
FIG. 8 is a schematic block diagram of a network device of an implementation of the present invention.
FIG. 9 is a schematic block diagram of a communication device of an implementation of the present invention.
FIG. 10 is a schematic block diagram of a chip of an implementation of the present invention.
FIG. 11 is a schematic block diagram of a communication system of an implementation of the present invention.

### Detailed Description

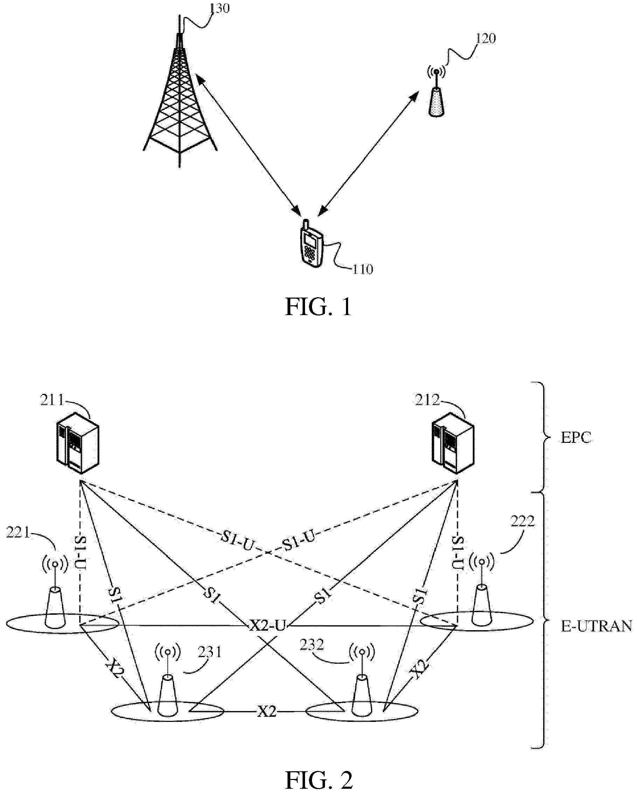

FIG. 1 is a schematic diagram of a communication system 100 of an implementation of the present application.

As shown in FIG. 1, a terminal device 110 is connected to a first network device 130 under a first communication system and a second network device 120 under a second communication system. For example, the first network device 130 is a network device under Long Term Evolution (LTE), and the second network device 120 is a network device under New Radio (NR).

Multiple cells may be included under the first network device 130 and the second network device 120.

It should be understood that FIG. 1 is an example of the communication system of an implementation of the present application, and implementations of the present application are not limited to that shown in FIG. 1.

For example, a communication system to which an implementation of the present invention is applied may include at least multiple network devices under the first communication system and/or multiple network devices under the second communication system.

For example, the system 100 shown in FIG. 1 may include one master network device under the first communication system and at least one secondary network device under the second communication system. The at least one secondary network device is respectively connected with the primary network device to form a multi-connection, and is respectively connected with the terminal device 110 to provide services for the terminal device 110. Specifically, the terminal device 110 may establish connections simultaneously with the master network device and the secondary network device.

Optionally, the connection established between the terminal device 110 and the primary network device 110 is a primary connection, and the connection established between the terminal device 110 and the secondary network device is a secondary connection. Control signaling of the terminal device 110 may be transmitted through the primary connection, while data of the terminal device 110 may be transmitted through the primary connection and the secondary connection at the same time, or may be transmitted only through the secondary connection.

For another example, the first communication system and the second communication system in implementations of the present invention are different, but specific categories of the first communication system and the second communication system are not restricted.

For example, the first communication system and the second communication system may be various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Time Division Duplex (TDD) system, a Universal Mobile Telecommunication System (UMTS).

In the system 100 shown in FIG. 1, for example, the first network device 130 is the master network device, and the second network device 120 is the secondary network device.

The first network device 130 may be an LTE network device, and the second network device 120 may be an NR network device. Or the first network device 130 may be an NR network device, and the second network device 120 may be an LTE network device. Or the first network device 130 and the second network device 120 may be both NR network devices. Or the first network device 130 may be a GSM network device or a CDMA network device etc., and the second network device 120 may be a GSM network device or a CDMA network device etc. Or the first network device 130 may be a Macrocell, and the second network device 120 may be a Microcell, a Picocell or a Femtocell, etc.

Optionally, the first network device 130 and the second network device 120 may be any access network devices.

Optionally, the access network device may be a Base Transceiver Station (BTS) in a Global System of Mobile Communication (GSM) or a Code Division Multiple Access (CDMA) system; or may be a NodeB (NB) in a Wideband Code Division Multiple Access (WCDMA) system; or may be an Evolutional Node B (eNB or eNodeB) in a Long Term Evolution (LTE) system.

Optionally, the access network device also may be a Next Radio Access Network (NG RAN), a base station (gNB) in an NR system, or a radio controller in a Cloud Radio Access Network (CRAN). Or the access network device may be a relay station, an access point, an vehicle-mounted device, a wearable device, or a network device in a future evolved Public Land Mobile Network (PLMN), etc.

For example, the first network device 130 is an LTE network device and the second network device 120 is an NR network device, a technical solution of an implementation of the present application may be applied to a wide-area Long Term Evolution (LTE) coverage and an NR island coverage mode, optionally, a working mode of tight interworking between the LTE and the NR. Main application scenarios of 5G include: Enhance Mobile Broadband (eMBB), Ultra-Reliable and Low Latency Communication (URLLC), massive Machine Type of Communication (mMTC). EMBB aims at obtaining multimedia content, service and data by users, and its demand grows very fast. As eMBB may be deployed in different scenarios, for example, indoor, urban, rural, etc., and the capabilities and demands are quite different, they may not be generalized, and may be analyzed in detail with specific deployment scenarios. Typical applications of URLLC include: industrial automation, power automation, telemedicine operation (surgery), traffic safety, etc. Typical characteristics of mMTC include: high connection density, small data volume, delay-insensitive service, low cost and long service life of modules, etc.

Optionally, the terminal device 110 may be any terminal device. The terminal device may communicate with one or more Core Networks through a Radio Access Network (RAN), and may also be referred to as an access terminal, a User Equipment (UE), a user unit, a user station, a mobile station, a mobile platform, a remote station, a remote terminal, a mobile device, a user terminal, a terminal, a wireless communication device, a user agent, or a user apparatus. For example, the terminal device may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing devices connected to a wireless modem, a vehicle-mounted device, a wearable device, or a terminal device in a 5G network or the like.

It should be understood that terms "system" and "network" are often used interchangeably in this document. A term "and/or" in this document is merely an association relationship describing associated objects, indicating that there may be three relationships, for example, A and/or B may indicate three cases: A alone, A and B, and B alone. In addition, a symbol "/" in this document generally indicates that objects before and after the symbol "/" have an "or" relationship.

FIG. 2 is a schematic block diagram of an EN-DC network architecture 200 of an implementation of the present invention.

As shown in FIG. 2, the network architecture 200 takes LTE-NR Dual Connectivity (EN-DC) as an example. In this case, LTE is a Master Node (MN) and NR is a Secondary Node (SN). In other alternative implementations, MN is also called MeNB and SN is also called SeNB.

In an implementation of the present application, an NR network architecture is added to an LTE architecture to form the network architecture 200. As shown in FIG. 2, the network architecture 200 may include MME/S-GW 211, MME/S-GW 212, gNB 221, gNB 222, eNB 231 and eNB 232. The MME/S-GW 211 is connected to the gNB 221 and the gNB 222 through an S1-U interface, and the MME/S-GW 211 is connected to the eNB 231 and the eNB 232 through an S1 interface. The MME/S-GW 212 is connected to the gNB 221 and the gNB 222 through an S1-U interface, and the MME/S-GW 212 is connected to the eNB 231 and the eNB 232 through an S1 interface. The gNB 221 and the gNB 222 are connected through X2-U. The eNB 231 and the eNB 232 are connected through X2. Similarly, the eNB 231 and the gNB 221 are connected through X2. The gNB 222 and the eNB 232 are connected through X2. In other words, eNBs are directly interconnected through the X2 interface, and eNBs are connected to EPC through the S1 interface. The S1 interface supports many-to-many connection between the MME/S-GW and the eNB, that is, one eNB may be connected with multiple MME/S-GWs, and multiple eNBs may also be connected to the same MME/S-GW simultaneously. Similarly, gNBs are directly interconnected through an X2-U interface, and the gNB is connected to the EPC by an S1-U interface. The S1-U interface supports a many-to-many connection between the MME/S-GW and the gNB, that is, one gNB may be connected with multiple MME/S-GWs, and multiple gNBs may also be connected to the same MME/s-GW simultaneously.

As shown in FIG. 2, in an implementation of the present application, the MME/S-GW 211 and the MME/S-GW 212 are Evolved Packet Core (EPC) of an LTE network, and the gNB 221, the gNB 222, the eNB 231 and the eNB 232 constitute an Evolved Universal Terrestrial Radio Access Network (E-UTRAN). However, implementations of the present application are not limited to this. For example, the MME/S-GW 211 and the MME/S-GW 212 may be replaced by any core network device that communicates with an access network device.

Optionally, the core network device may be a 5G core network device, such as an Access and Mobility Management Function (AMF) or a Session Management Function (SMF). Optionally, the core network device may also be an Evolved Packet Core (EPC) device of the LTE network, such as, a Session Management Function + Core Packet Gateway (SMF+PGW-C) device.

It should be understood that the SMF+PGW-C may simultaneously realize functions that the SMF and the PGW-C may realize.

Optionally, in an implementation of the present application, the AMF may interact with the SMF, for example, the SMF obtains some information of a radio access network side from the AMF.

It should be noted that the network architecture 200 shown in FIG. 2 is only an exemplary description of a dual connection network architecture, and implementations of the present invention are not limited to this. For example, in other alternative implementations, the network architecture 200 may be simply modified. For example, as an example, the gNB 221 and/or the gNB 222 may not be directly connected with the EPC (i.e., the MME/S-GW 211 and the MME/S-GW 212). It should also be understood that the EN-DC shown in FIG. 2 is only an example of a dual connection network architecture, and DC modes in implementations of the present invention include, but are not limited to, EN-DC, NE-DC, 5GC-EN-DC and NR DC. In the EN-DC, an LTE node serves as an MN node and an NR node serves as an SN node, to connect to the EPC core network. In the NE-DC, the NR serves as an MN node and eLTE serves as an SN node, to connect to the 5GC core network. In the 5GC-EN-DC, the eLTE serves as an MN node and NR serves as an SN node, to connect to the 5GC core network. In the NR DC, the NR serves as an MN node and the NR serves as an SN node, to connect to the 5GC core network.

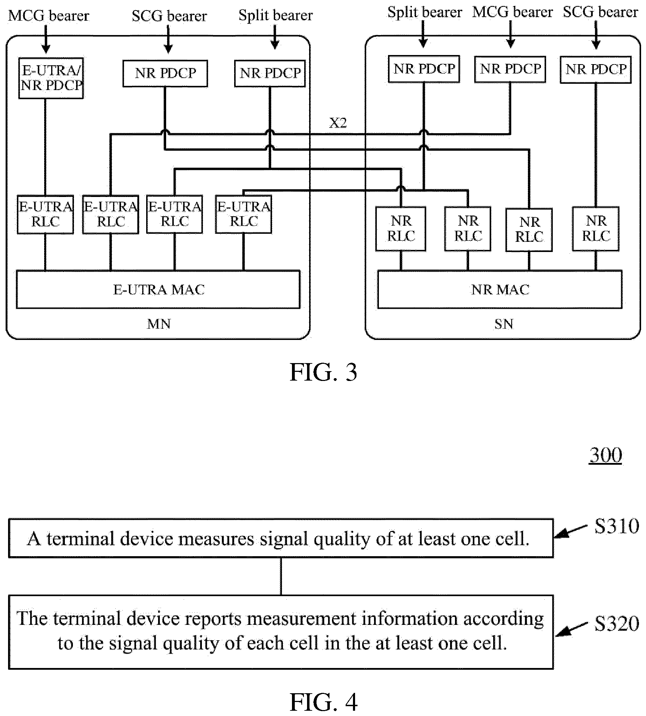

In the dual connection network architecture, a data plane radio bearer may be independently served by the MN or the SN, or may be simultaneously served by the MN and the SN. When the data plane radio bearer is only served by the MN, it is referred to as an MCG bearer, that is, a serving cell group controlled by the MN. When the data plane radio bearer is only served by the SN, it is referred to as an SCG bearer, that is, a serving cell group controlled by the SN. When the data plane radio bearer is served by the MN and the SN simultaneously, it is referred to as a split bearer. Specifically, the split bearer may be divided into a MCG split bearer and a SCG split bearer. The MCG split bearer and the SCG split bearer mainly differs in functions of Packet Data Convergence Protocol (PDCP) layer and keys of the PDCP layer. In an implementation of the present application, in order to minimize change between the MCG split bearer and the SCG split bearer, reduce standardization difficulty, implement testing work, and minimize differentiation of market product characteristics, optionally, a concept of bearer harmonization is proposed, as shown in Figure 3. The MCG Split bearer and the SCG split bearer are unified into one bearer type, namely split bearer, that is, the split form is transparent to an UE.

In actual application, as shown in FIG. 3, the MCG bearer, the SCG bearer and the split bearer served by the MN and/or the SN go through the corresponding RLC layer of Evolved Universal Terrestrial Radio Access (E-UTRA) Radio Link Control (RLC) or New Radio (NR), and reach the corresponding Media Access Control (MAC) layer of the E-UTRA or the NR.

In an implementation, both MN and SN are provided with an S 1-U connection. Data flow is transmitted via the MN and the SN separately after divided by a core network, and the SN plays a role of load sharing. This architecture is called a 1a mode, which has no special requirements for backhaul between base stations, no special configuration needs to be made for layer 2, the protocol layer, there is no load sharing function between base stations, and its peak rate depends entirely on wireless capabilities of the MN and the SN. During handover, the core network needs to participate and there is a problem that data transmission may be broken.

In another implementation, the S1-U connection only exists between the MN and the core network. All downlink data flows are transmitted to the MN first, then after the all downlink data flows are divided by the MN according to a certain algorithm and a certain proportion, a part of data is sent to the SN by an X2 interface, and finally the data is issued by the MN and the SN to a UE simultaneously. This architecture is called a 3c mode. In this mode, users obtain the downlink data from 2 systems, which is convenient for realizing load sharing and resource coordination functions, and is also beneficial to improving user speed. In addition, the handover process has little impact on the core network, and because there are many wireless links, the handover delay is low. Its disadvantages are that requirements for backhaul between base stations are high, requirements for the layer 2 protocol complexity are high, and the backhaul between base stations needs to realize functions such as flow control. In addition, the split bearer mode is only suitable to a downlink direction. In an uplink direction, the data stream is not divided and may be transmitted via the MN or the SN.

Each sub-layer shown in FIG. 3 may send data to a designated layer of a receiving end according to difference of data of protocol data units. Data entering each sub-layer and being unprocessed is called a service data unit (SDU), and data in a specific format after processed by the sub-layer is called a Protocol Data Unit (PDU). The SDU is an information unit transmitted from a high protocol layer to a low protocol layer. Original data of the SDU is PDU of an upper protocol layer. In other words, a PDU formed by the present layer is an SDU of an under layer.

For example, each logical channel of each terminal device has an RLC entity, and data received by the RLC entity from a PDCP layer or data sent by the RLC entity to the PDCP layer may be referred to as RLC SDU (or PDCP PDU). Data received by the RLC entity from a MAC layer or data sent by the RLC entity to the MAC layer may be referred to as RLC PDU (or MAC SDU).

It should also be understood that in implementations of the present invention, the RLC layer is located between the PDCP layer and the MAC layer. The RLC layer may communicate with the PDCP layer through a Service Access Point (SAP) and communicate with the MAC layer through a logical channel. However, implementations of the present application are not limited to this.

FIG. 4 is a schematic flow chart of a method 300 for reporting measurement information according to an implementation of the present application, and the method 300 may be performed by a terminal device. The terminal device shown in FIG. 4 may be the terminal device shown in FIG. 1, which may be in an idle state or an inactive state. The network device shown in FIG. 4 may be the access network device shown in FIG. 1. The method 300 includes part or all of following contents.

In S310, a terminal device measures signal quality of at least one cell.

In S320, the terminal device reports measurement information according to the signal quality of each cell in the at least one cell.

In an implementation of the present application, the terminal device in the idle state or the inactive state directly measures the signal quality of the cell and reports the measurement information, which avoids a situation that the terminal device enters an active state first, and then the network device configures a secondary network device or a secondary serving cell for the terminal device based on a reported measurement result and an established bearer, thus effectively reducing delay and reducing signaling overhead at the same time.

The terminal device according to an implementation of the present application may be a terminal device in the idle state (RRC_IDLE) or the inactive state (RRC_INACTIVE).

For convenience of understanding, the terminal device in the idle state, the inactive state and the active state (RRC_ACTIVE) is briefly introduced below.

RRC_INACTIVE state is different from the RRC_IDLE state and the RRC_ACTIVE state.

As for the RRC_IDLE state, no RRC connection exists between the terminal device and the network device, and the network device does not store AS context information of the terminal device. When the terminal device needs to be paged, a core network initiates paging, and the core network configures a paging area. Its mobility is cell selection or cell reselection based on the terminal device.

As for the RRC_ ACTIVE state, an RRC connection exists between the terminal device and the network device, and the network device and the terminal device store the AS context information of the terminal device. A location of the terminal device acquired by the network device is at a specific cell level. Its mobility is a mobility controlled by the network device.

As for the RRC_INACTIVE state, a connection exists between the core network (CN) and the network device, the AS context information of the terminal device is stored on a certain network device, the paging is triggered by a Radio Access Network (RAN), and the paging area of the RAN is managed by the RAN, that is, the location of the terminal device acquired by the network device is at the paging area level of the RAN. Its mobility is the cell selection or cell reselection based on the terminal device. In other words, a connection between the terminal device in the RRC_INACTIVE state and the network device is in an inactive state, and the network device retains the context information of the terminal device, wherein the context information is used for quickly establishing the connection between the terminal device and the network device.

The terminal device receives first indication information broadcasted by the network device. The terminal device determines the at least one cell according to the first indication information. The first indication information includes an identifier of at least one cell group to which the at least one cell belongs, an identifier of the at least one cell, a measurement frequency and a subcarrier spacing, wherein a cell group is a cell group in dual connection network architecture.

For example, the first indication information includes the identifier of at least one cell group to which the at least one cell belongs, the terminal device receives the first indication information broadcasted by the network device, obtains the measurement information according to the first indication information, and finally reports the measurement information to the network device. Further, the first indication information may indicate an id of each cell group in the at least one cell group.

Optionally, when the terminal device supports a Dual Connection (DC) mode, the terminal device receives the first indication information.

It should be understood that in a Dual Connection (DC) scenario, multiple network nodes (Cell Groups (CG)) may serve the terminal device, and each cell group may constitute a dual connection architecture of the terminal device.

It should be understood that in an implementation of the present application, a CG may be equivalent to a network node or a network device, etc.

It should also be understood that it is only an example that the terminal device determines the at least one cell based on the first indication information broadcasted by the network device. In other alternative implementations, the terminal device may also determine the at least one cell based on other ways, such as pre-configuration information.

In an implementation of the present application, the network device broadcasts the measurement demand information to the terminal device in a form of broadcasting, so that the terminal device determines a cell group or a cell that needs to be measured, thereby realizing that the terminal device reports the measurement information and the network device configures the terminal device. Therefore, when a terminal device in an idle state or an inactive state enters a dual connection state, compared with the situation that the network device first enters a non-DC mode, establishes the bearer, and then performs reconfiguration through an RRC connection to enter a DC mode in the prior art, the signaling overhead may be effectively saved

Optionally, the terminal device determines a threshold value. The terminal device generates and reports the measurement information according to whether the signal quality of each cell meets the threshold value.

Optionally, the measurement information includes an identifier of a target cell group and/or an identifier of a target cell, wherein each cell group in the target cell group includes at least one cell meeting the threshold value, and the target cell is a cell meeting the threshold value in the at least one cell.

Optionally, the measurement information includes second indication information, wherein the second indication information is used for indicating whether the signal quality of each cell meets the threshold value.

A specific form of the second indication information will be exemplarily explained below.

Optionally, the second indication information includes at least one bit sequence, wherein a first bit sequence in the at least one bit sequence is used for indicating whether the signal quality of each cell in the first cell group in the at least one cell group meets the threshold value.

Optionally, each bit sequence in the at least one bit sequence at least has one bit indicating that the signal quality of the cell meets the threshold value.

Optionally, the second indication information further includes a correspondence relationship between the first bit sequence and the identifier of the first cell group.

Optionally, the second indication information further includes a correspondence relationship between each bit sequence in the at least one bit sequence and an identifier of the at least one cell group.

Optionally, the first bit sequence includes a first value and/or a second value, wherein the first value is used for indicating that the signal quality of the cell does not meet the threshold value, and the second value indicates that the signal quality of the cell meets the threshold value.

Optionally, the first value is 0 and the second value is 1.

Optionally, before reporting, by the terminal device, the measurement information according to the signal quality of each cell in the at least one cell, the method further includes: receiving, by the terminal device, the threshold value broadcasted by the network device.

Optionally, the threshold value is a preconfigured threshold value.

Optionally, the threshold value includes a Reference Signal Receiving Power (RSRP) threshold value and/or a Reference Signal Receiving Quality (RSRQ) threshold value.

It should be understood that in an implementation of the present application, it is only an exemplary description that the terminal device generates the measurement information including the second indication information based on the threshold value and report the measurement information, and implementations of the present application are not limited to this.

For example, the terminal device may also report the signal quality of each cell to the network device in an order of the signal quality from high to low.

For another example, the terminal device may also report the signal quality of each cell to the network device in the order of the signal quality from low to high.

In an implementation of the present application, the network device may implement that the terminal device reports the measurement information and the network device configures the terminal device via signaling existing in a competitive random access procedure, such that when a terminal device in the idle state or the inactive state enters the dual connection mode, the signaling overhead may be effectively saved, and the data loss caused by the change of the bearer type may be avoided

Optionally, the terminal device may carry the measurement information in a message 5, MSG5, or a security mode command, Securitymodecomplete, or a measurement report and report the measurement information to the network device.

Optionally, before the terminal device reports the measurement information according to the signal quality of each of the at least one cell, the terminal device sends third indication information to the network device, wherein the third indication information is used for indicating that the terminal device carries the measurement information in a message 5, MSG5, or a security mode command, Securitymodecomplete, or a measurement report and report the measurement information to the network device

Optionally, the terminal device sends a message 3, MSG3, to the network device, wherein the MSG3 includes third indication information.

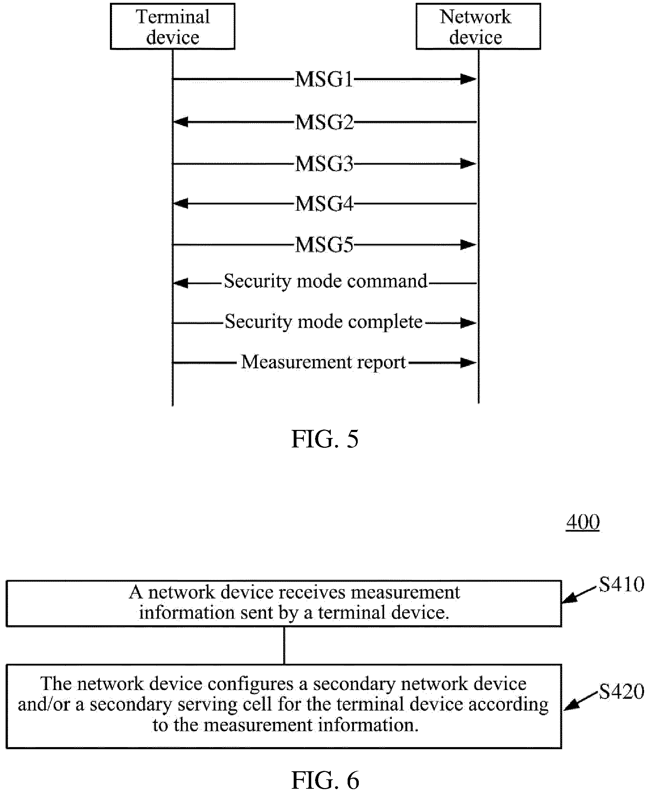

In order to facilitate understanding of the message carrying the measurement information and the third indication information, the competitive random access of an implementation of the present invention will be explained with reference to FIG. 5 below.

FIG. 5 is a schematic flow chart of competitive random access of an implementation of the present invention.

It should be understood that after a cell search process, the terminal device has achieved downlink synchronization with the cell, so the terminal device may receive downlink data. However, the terminal device may carry out uplink transmission only if the terminal device achieves uplink synchronization with the cell. The terminal device establishes a connection with the cell through a Random Access Procedure and achieves the uplink synchronization.

A main purpose of random access is to achieve the uplink synchronization and assign a unique identifier, Cell Radio Network Temporary Identifier (C-RNTI), to the terminal device.

As shown in FIG. 5, in an implementation of the present invention, a procedure of competitive random access is as follows.

The terminal device sends a message 1 (MSG1) to the network device, wherein the MSG1 may carry a random access Preamble. After receiving the MSG1 sent by the terminal device, the network device may send a response message in response to the MSG1, that is, a message 2 (MSG2). The network device may calculate a Random Access Radio Network Temporary Identifier (RA-RNTI) according to a resource location of the MSG1, and scramble the MSG2 with the RA-RNTI. After receiving the MSG2, the terminal device may send a message 3 (MSG3) to the network device according to the MSG2. The MSG3 may optionally carry identifier information of the terminal device, etc. After receiving the MSG3 sent by the terminal, the network device may send a message 4 (MSG 4) to the terminal according to the MSG3. After receiving the MSG4, the terminal device may send a message 5 (MSG5) to the network device according to the MSG4 after determining that the MSG4 is for the terminal itself, and then carry out subsequent data transmission. Subsequently, after receiving the security mode command sent by the network device, the terminal device enters a security mode and sends the Securitymodecomplete to the network device, and further sends the measurement report to the network device.

The terminal device sends the preamble to the network device to tell the network device that there is a random access request, at the same time, the network device is enabled to estimate a transmission delay between the network device and the terminal device and calibrate uplink timing according to the transmission delay. Optionally, the terminal device selects a preamble index and a Physical Random Access Channel (PRACH) resource for transmitting the preamble, and then the preamble is transmitted on the PRACH. Optionally, the network device notifies all the terminal devices that the preamble is allowed to be transmitted on which resources, for example, SIB2, by broadcasting a System Information Block (SIB).

The network device sends a Random Access Response (RAR) to the terminal device. Specifically, after sending the preamble, the terminal device may listen to a corresponding Physical Downlink Control Channel (PDCCH) according to a value of a Random Access Radio Network Temporary Identifier (RA-RNTI) within an RAR time window, so as to receive the RAR of the corresponding RA-RNTI. If the RAR replied by the network device is not received within the RAR time window, it may be considered that the random access procedure is failed.

The terminal device sends the message 3 (MSG3) to the network device, and the terminal device may carry its own unique identifier in the MSG3, for example, a Cell Radio Network Temporary Identifier (C-RNTI), or for another example, a terminal device identifier (S-TMSI or a random number) from a core network.

In an implementation of the present application, the terminal device may carry the mentioned third indication information in the MSG3.

The network device sends a contention resolution message to the terminal device. Specifically, in a contention resolution mechanism, the network device may carry a unique identifier of a winning terminal device in the contention resolution (MSG4), while other terminal devices that do not win in the contention resolution will re-initiate a random access.

After receiving the MSG4 sent by the network device, the terminal device sends the MSG5 to the network device. Further, after receiving the security mode command sent by network device, the terminal device enters the security mode, sends the Securitymodecomplete to the network device, and then sends the measurement report to the network device.

In an implementation of the present application, the terminal device may carry the measurement information in the MSG5 or the security mode command or the measurement report. For example, the second indication information is carried in the MSG5 or the security mode command or the measurement report. For another example, a Reference Signal Receiving Power (RSRP) value and/or a Reference Signal Receiving Quality (RSRQ) value of each cell measured by the terminal device is carried in the security mode command or the measurement report.

The preferred implementations of the present application have been described in detail above in combination with the attached drawings, but the present application is not limited to specific details of the implementations. Within a technical conception scope of the present application, various simple variants may be made to the technical solution of the present application, and these simple variants all belong to the protection scope of the present application.

For example, various specific technical features described in the specific implementations may be combined in any suitable way without contradiction. In order to avoid unnecessary repetition, the present application will not further explain any possible combination ways.

For another example, different implementations of the present application may be combined arbitrarily, as long as they do not violate the idea of the present application, and they should also be regarded as the contents disclosed in the present application.

It should be understood that values of sequence numbers of various processes do not mean an execution order in various implementations of the present application. The execution order of the processes should be determined according to functions and internal logics of the processes, and should not be construed as any limitation on the implementation processes of the implementations of the present application.

The method for reporting measurement information according to an implementation of the present application is described in detail from a perspective of reporting measurement information by a terminal device in combination with FIG. 2 to FIG. 5. In combination with FIG. 6, the method for configuring a terminal device by a network device after receiving measurement information reported by a terminal device according to an implementation of the present application from a perspective of the network device will be described below.

FIG. 6 shows a schematic flow chart of a method 400 for configuring the terminal device according to an implementation of the present application. The method 400 may be performed by a network device as shown in FIG. 1. As shown in FIG. 6, the method 400 includes acts S410 and S420.

In S410, a network device receives measurement information sent by a terminal device, wherein the measurement information is information generated by the terminal device in an idle state or an inactive state according to signal quality of each cell in at least one cell.

In S420, the network device configures a secondary network device and/or a secondary serving cell for the terminal device according to the measurement information.

Specifically, the network device selects an appropriate secondary network device and/or a secondary cell to add based on the measurement information reported by the terminal device.

Before receiving the measurement information sent by the terminal device, the network device broadcasts first indication information to the terminal device in the idle state or an inactive state, where the first indication information is used by the terminal device to determine the at least one cell; wherein the first indication information includes an identifier of at least one cell group to which the at least one cell belongs, an identifier of the at least one cell, a measurement frequency and a subcarrier spacing, wherein a cell group is a cell group in dual connection network architecture.

Optionally, before receiving the measurement information sent by the terminal device, the network device broadcasts a threshold value to the terminal device, wherein the threshold value is used by the terminal device to generate the measurement information according to whether the signal quality of each cell meets the threshold value.

Optionally, the measurement information includes an identifier of a target cell group and/or an identifier of a target cell, wherein each target cell group includes at least one cell meeting the threshold value, and the target cell is a cell meeting the threshold value in the at least one cell.

Optionally, the measurement information includes second indication information, wherein the second indication information is used for indicating whether the signal quality of each cell meets the threshold value.

Optionally, the second indication information includes at least one bit sequence, wherein a first bit sequence in the at least one bit sequence is used for indicating whether signal quality of each cell in a first cell group in the at least one cell group meets the threshold value.

Optionally, each bit sequence in the at least one bit sequence at least has one bit for indicating that the signal quality of a cell meets the threshold value.

Optionally, the second indication information further includes a correspondence relationship between a first bit sequence and an identifier of the first cell group.

Optionally, the first bit sequence includes a first value and/or a second value, wherein the first value is used for indicating that the signal quality of a cell does not meet the threshold value, and the second value is used for indicating that the signal quality of a cell meets the threshold value.

Optionally, the first value is 0 and the second value is 1.

Optionally, the threshold value includes an RSRP threshold value and/or an RSRQ threshold value.

Optionally, the network device receives the signal quality of each cell reported by the terminal device according to an order of the signal quality from high to low.

Optionally, the network device receives the measurement information carried in a message 5, MSG5, or a security mode command or a measurement report sent by the terminal device.

Optionally, before receiving the measurement information sent by the terminal device, the network device receives third indication information sent by the terminal device, wherein the third indication information is used for indicating that the terminal device carries the measurement information in the message 5, MSG5, or the security mode command or the measurement report and report the measurement information to the network device.

Optionally, the network device receives a message 3, MSG3, sent by the terminal device, wherein the MSG3 includes the third indication information.

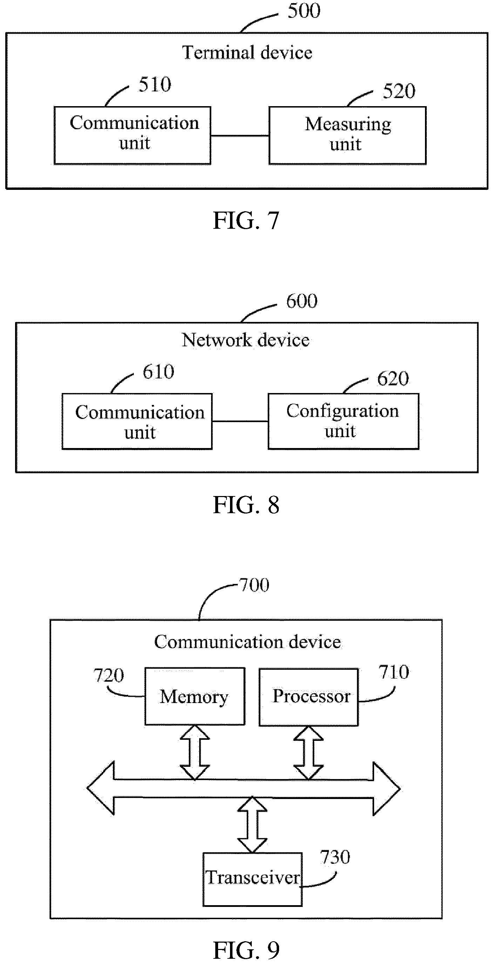

FIG. 7 is a schematic block diagram of a terminal device 500 according to an implementation of the present application.

As shown in FIG. 7, optionally, the terminal device 500 is in an idle state or an inactive state, and the terminal device 500 includes:
a measuring unit 520, configured to measure signal quality of at least one cell; and
a communication unit 510, configured to report measurement information according to the signal quality of each cell in the at least one cell.

Before the measuring unit 520 measures the signal quality of at least one cell, the communication unit 510 is further configured to:
receive first indication information broadcasted by a network device; and determine the at least one cell according to the first indication information; wherein, the first indication information includes an identifier of at least one cell group to which the at least one cell belongs, an identifier of the at least one cell, a measurement frequency and a subcarrier spacing, wherein a cell group is a cell group in dual connection network architecture.

Optionally, the communication unit 510 is specifically configured to: determine a threshold value; generate the measurement information according to whether the signal quality of each cell meets the threshold value and report the measurement information.

Optionally, the measurement information includes an identifier of a target cell group and/or an identifier of a target cell, wherein each target cell group at least includes one cell meeting the threshold value, and the target cell is a cell meeting the threshold value in the at least one cell.

Optionally, the measurement information includes second indication information, wherein the second indication information is used for indicating whether the signal quality of each cell meets the threshold value.

Optionally, the second indication information includes at least one bit sequence, wherein a first bit sequence in the at least one bit sequence is used for indicating whether the signal quality of each cell in the first cell group in the at least one cell group meets the threshold value.

Optionally, each bit sequence in the at least one bit sequence at least has one bit for indicating that the signal quality of a cell meets the threshold value.

Optionally, the second indication information further includes a correspondence relationship between the first bit sequence and an identifier of the first cell group.

Optionally, the first bit sequence includes a first value and/or a second value, wherein the first value is used for indicating that the signal quality of a cell does not meet the threshold value, and the second value is used for indicating that the signal quality of a cell meets the threshold value.

Optionally, the first value is 0 and the second value is 1.

Optionally, before reporting the measurement information according to the signal quality of each cell, the communication unit 510 is further configured to: receive the threshold value broadcasted by the network device.

Optionally, the threshold value is a preconfigured threshold value.

Optionally, the threshold value includes: an RSRP threshold value and/or an RSRQ threshold value.

Optionally, the communication unit 510 is specifically configured to: report the signal quality of each cell to the network device according to an order of the signal quality from high to low.

Optionally, the communication unit 510 is specifically configured to: carry the measurement information in a message 5, MSG5, or a security mode command or a measurement report and report the measurement information to the network device.

Optionally, before reporting the measurement information according to the signal quality of each cell, the communication unit 510 is further configured to send third indication information to the network device, wherein the third indication information is used for indicating that the terminal device carry the measurement information in a message 5, MSG5, or a security mode command or a measurement report and report the measurement information to the network device.

Optionally, the communication unit 510 is specifically configured to: send a message 3, MSG3, to the network device, wherein the MSG3 includes the third indication information.

It should be understood that the device implementations and the method implementations correspond to each other, and similar description may refer to that of the method implementations. Specifically, the terminal device 500 shown in FIG.7 may correspond to a corresponding subject for performing the method 300 in an implementation of the present application, and the aforementioned and other operations and/or functions of various units in the terminal device 500 are respectively for realizing corresponding flows in various methods in FIG. 1, which will not be repeated here for the sake of brevity.

FIG. 8 is a schematic block diagram of a network device 600 of an implementation of the present application.

As shown in FIG. 8, the terminal device 600 includes a communication unit 610 and a configuration unit 620.

The communication unit 610 is configured to receive measurement information sent by a terminal device, wherein the measurement information is information generated by the terminal device in an idle state or an inactive state according to signal quality of each cell in at least one cell.

The configuration unit 620 is configured to configure a secondary network device and/or a secondary serving cell for the terminal device according to the measurement information.

Before receiving the measurement information sent by the terminal device, the communication unit 610 is further configured to broadcast first indication information to the terminal device in the idle state or an inactive state, wherein the first indication information is used by the terminal device to determine the at least one cell, and the first indication information includes an identifier of at least one cell group to which the at least one cell belongs, an identifier of the at least one cell, a measurement frequency and a subcarrier spacing, wherein a cell group is a cell group in dual connection network architecture.

Optionally, before receiving the measurement information sent by the terminal device, the communication unit 610 is further configured to broadcast a threshold value to the terminal device, wherein the threshold value is used by the terminal device to generate the measurement information according to whether the signal quality of each cell meets the threshold value.

Optionally, the measurement information includes an identifier of a target cell group and/or an identifier of a target cell, wherein each target cell group at least includes one cell meeting the threshold value, and the target cell is a cell meeting the threshold value in the above at least one cell.

Optionally, the measurement information includes second indication information, wherein the second indication information is used for indicating whether the signal quality of each cell meets the threshold value.

Optionally, the second indication information includes at least one bit sequence, wherein a first bit sequence in the at least one bit sequence is used for indicating whether the signal quality of each cell in a first cell group in the at least one cell group meets the threshold value.

Optionally, each bit sequence of the at least one bit sequence at least has a bit for indicating that the signal quality of a cell meets the threshold value.

Optionally, the second indication information further includes a correspondence relationship between the first bit sequence and an identifier of the first cell group.

Optionally, the first bit sequence includes a first value and/or a second value, wherein the first value is used for indicating that the signal quality of the cell does not meet the threshold value, and the second value is used for indicating that the signal quality of a cell meets the threshold value.

Optionally, the first value is 0 and the second value is 1.

Optionally, the threshold value includes an RSRP threshold value and/or an RSRQ threshold value.

Optionally, the communication unit 610 is specifically configured to receive the signal quality of each cell reported by the terminal device according to an order of the signal quality from high to low.

Optionally, the communication unit 610 is specifically configured to receive the measurement information carried in a message 5, MSG5, or a security mode command or a measurement report sent by the network device.

Optionally, the communication unit 610 is specifically configured to receive third indication information sent by the terminal device before the measurement information sent by the terminal device is received, wherein the third indication information is used for indicating that the terminal device carries the measurement information in the message 5, MSG5, or the security mode command or the measurement report and report the measurement information to the network device.

Optionally, the communication unit 610 is specifically configured to receive the message 3, MSG3, sent by the terminal device, wherein the MSG3 includes the third indication information.

It should be understood that the device implementations and the method implementations may correspond to each other, and similar description may refer to the description of the method implementations. Specifically, the network device 600 shown in FIG.8 may correspond to a corresponding subject for performing the method 400 in an implementation of the present application, and the aforementioned and other operations and/or functions of various units in the network device 600 are respectively for realizing corresponding flows of various methods in FIG. 1, which will not be repeated here for the sake of brevity.

In the above, the communication device of an implementation of the present application is described from the perspective of functional modules in combination with FIG. 7 and FIG. 8. It should be understood that the functional module may be realized in hardware, instructions in a form of software, or a combination of the hardware and software modules.

Specifically, each act of the method implementation in implementations of the present application may be completed by hardware integrated logic circuits in the processor and/or instructions in the form of software, and the acts of the method disclosed in combination with an implementation of the present application may be directly embodied as being executed by a hardware decoding processor, or by a combination of hardware in the decoding processor and the software modules.

Optionally, the software module may be located in a conventional storage medium in the field, such as a random access memory, a flash memory, a read-only memory, a programmable read-only memory, an electrically erasable programmable memory, or a register etc. The storage medium is located in a memory, and the processor reads information in the memory and completes the acts of the method implementation in combination with its hardware.

For example, in an implementation of the present application, the communication unit 510 shown in FIG. 7 and the communication unit 610 shown in FIG. 8 may be implemented by transceivers, and the measuring unit 520 shown in FIG. 7 and the configuration unit 620 shown in FIG. 8 may be implemented by processors.

FIG. 9 is a schematic structural diagram of a communication device 700 of an implementation of the present application. The communication device 700 shown in FIG. 9 includes a processor 710, wherein the processor 710 may call and run a computer program from a memory to implement the method in an implementation of the present application.

Optionally, as shown in FIG. 9, the communication device 700 may further include a memory 720. The memory 720 may be configured to store indication information, or may be configured to store codes, instructions, etc., executed by the processor 710. The processor 710 may call and run a computer program from the memory 720 to implement the method in an implementation of the present application.

The memory 720 may be a separate device independent of the processor 710 or may be integrated into the processor 710.

Optionally, as shown in FIG. 9, the communication device 700 may further include a transceiver 730, and the processor 710 may control the transceiver 730 to communicate with other devices. Specifically, the transceiver 730 may send information or data to other devices or receive information or data sent by other devices.

The transceiver 730 may include a transmitter and a receiver. The transceiver 730 may further include antennas, and the number of antennas may be one or more.

Optionally, the communication device 700 may be a network device of an implementation of the present application, and the communication device 700 may implement a corresponding process implemented by the network device in various methods of implementations of the present application. That is, the communication device 700 of an implementation of the present application may correspond to the terminal device 500 in an implementation of the present application, and may correspond to a corresponding subject for performing the method 300 according to an implementation of the present application, and this will not be repeated here for brevity.

Optionally, the communication device 700 may be a terminal device of an implementation of the present application, and the communication device 700 may implement a corresponding process implemented by the terminal device in various methods of implementations of the present application. That is, the communication device 700 of an implementation of the present application may correspond to the network device 600 in an implementation of the present application, and may correspond to a corresponding subject for performing the method 400 according to an implementation of the present application, and this will not be repeated here for brevity.

It should be understood that the various components in the communication device 700 are connected through a bus system. In addition to a data bus, the bus system further includes a power bus, a control bus and a state signal bus.

In addition, there is also provided a chip in an implementation of the present application, wherein the chip may be an integrated circuit chip with signal processing capability, and it may implement or execute the methods, acts and logic block diagrams disclosed in an implementation of the present application.

Optionally, the chip may be applied to various communication devices, enabling the communication devices installed with the chip to execute the disclosed methods, acts and logic block diagrams in an implementation of the present application.

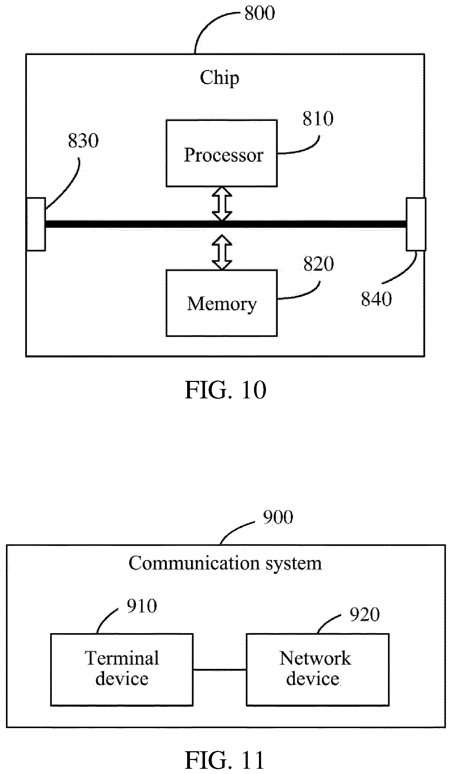

FIG. 10 is a schematic structural diagram of a chip according to an implementation of the present application.

The chip 800 shown in FIG. 10 includes a processor 810. The processor 810 may call and run a computer program from a memory to implement the method in an implementation of the present application.

Optionally, as shown in FIG. 10, the chip 800 may further include a memory 820. The processor 810 may call and run the computer program from the memory 820 to implement the method in an implementation of the present application. The memory 820 may be configured to store indication information, and also may be configured to store codes, instructions, etc., executed by the processor 810.

The memory 820 may be a separate device independent of the processor 810, and also may be integrated in the processor 810.

Optionally, the chip 800 may further include an input interface 830. The processor 810 may control the input interface 830 to communicate with other devices or chips. Specifically, information or data sent by other devices or chips may be acquired.

Optionally, the chip 800 may further include an output interface 840. The processor 810 may control the output interface 840 to communicate with other devices or chips. Specifically, information or data may be output to other devices or chips.

Optionally, the chip may be applied to a network device of an implementation of the present application, and the chip may implement corresponding processes implemented by the network device in various methods of implementations of the present application, and this will not be repeated here for brevity.

Optionally, the chip may be applied to a terminal device of an implementation of the present application, and the chip may implement corresponding processes implemented by the terminal device in various methods of implementations of the present application, and this will not be repeated here for brevity.

It should be understood that the chip mentioned in an implementation of the present application may be referred to as a system-level chip, a system chip, a chip system or a system-on-chip, etc. It also should be understood that various components in the chip 800 are connected through a bus system. In addition to a data bus, the bus system further includes a power bus, a control bus and a state signal bus.

The processor mentioned in an implementation of the present application may be a general purpose processor, a digital signal processor (DSP), an application specific integrated circuit (ASIC), a field programmable gate array (FPGA), or other programmable logic devices, a transistor logic device, or a discrete hardware component, etc. Furthermore, the general purpose processor may be a microprocessor or the processor may be any conventional processor, etc.

In addition, the memory mentioned in implementations of the present application may be a transitory memory or non-transitory memory, or may include both the transitory memory and the non-transitory memory. The non-transitory memory may be a read-only memory (ROM), a programmable ROM (PROM), an erasable PROM (EPROM), an electrically erasable EPROM (EEPROM), or a flash memory. The transitory memory may be a Random Access Memory (RAM) which serves as an external cache.

It should be understood that, the explanation for the above memory is illustrative rather than restrictive. For example, the memory in an implementation of the present application may be a static RAM (SRAM), a dynamic RAM (DRAM), a synchronous DRAM (SDRAM), a dual data rate SDRAM (DDR SDRAM), an enhanced SDRAM (ESDRAM), a synch link DRAM (SLDRAM) and a Direct Rambus RAM (DR RAM), etc.

There is also provided a computer readable storage medium in an implementation of the present application, configured to store a computer program.

Optionally, the computer readable storage medium may be applied to a network device of an implementation of the present application, and the computer program enables the computer to execute corresponding processes implemented by the network device in various methods of implementations of the present application, and this will not be repeated here.

Optionally, the computer readable storage medium may be applied to a mobile terminal/terminal device in an implementation of the present application, and the computer program enables the computer to execute corresponding processes implemented by the mobile terminal/terminal device in various methods of implementations of the present application, and this will not be repeated here.

There is also provided a computer program product in an implementation of the present application, including computer program instructions.

Optionally, the computer program product may be applied to a network device of an implementation of the present application, and the computer program instructions enable the computer to execute corresponding processes implemented by the network device in various methods of implementations of the present application, and this will not be repeated here for brevity.

Optionally, the computer program product may be applied to a mobile terminal/terminal device of an implementation of the present application, and the computer program instructions enable the computer to perform corresponding processes implemented by the mobile terminal/terminal device in various methods according to implementations of the present application, and this will not be repeated here for brevity.

There is also provided a computer program in an implementation of the present application.

Optionally, the computer program may be applied in a network device in an implementation of the present application. When the computer program is run on the computer, the computer is enabled to execute corresponding processes implemented by the network device in various methods of implementations of the present application, and this will not be repeated here for brevity.

FIG. 11 is a schematic block diagram of a communication system 900 of an implementation of the present application. As shown in FIG. 11, the communication system 900 may include a terminal device 910 and a network device 920. The terminal device 910 may be configured to implement corresponding functions implemented by the terminal device in the methods 300 and 400, and the composition of the terminal device 910 may be as shown in the terminal device 500 in FIG. 7, and this is not repeated here for brevity.

The network device 920 may be configured to implement corresponding functions implemented by the network device in the methods 300 and 400, and the composition of the network device 920 may be as shown in the network device 600 in FIG. 8, and this is not described here for brevity.

It should be understood that the terms used in implementations of the present invention and the appended claims are only for a purpose of describing specific implementations but are not intended to limit implementations of the present invention.

For example, singular forms "a", "said", and "the" used in the implementations of the present application and the appended claims are also intended to include plural forms unless the context clearly indicates other meanings.

An ordinary skilled in the art may recognize that, various exemplary units and algorithm acts, which are described in combination with the implementations disclosed in this specification, may be implemented by electronic hardware or a combination of computer software and electronic hardware. Whether these functions are implemented in hardware or software depends on a particular application and a design constraint condition of the technical solution. Those skilled in the art may use different manners to realize the described functions for each particular application, but such realization should not be considered to be beyond the scope of implementations of the present application.

The function units may be stored in a computer readable storage medium if realized in a form of software functional units and sold or used as a separate product. Based on this understanding, technical solutions of implementations of the present application, in essence, or a part contributing to the existing art, or a part of the technical solution, may be embodied in a form of a software product, wherein the software product is stored in a storage medium and includes several instructions for causing a computer device (which may be a personal computer, a server, or a network device, etc.) to execute all or part of the acts of the methods of the implementations of the present application. The aforementioned storage medium includes various mediums capable of storing program codes, such as, a U disk, a mobile hard disk, a read-only memory, a random access memory, a magnetic disk, or an optical disk, etc.

A skilled in the art may clearly understand that, for a purpose of convenience and brevity of the description, a particular working process of the described system, apparatus, and unit may be referred to a corresponding process in the aforementioned method implementations, which will not be described herein again.

In several implementations provided by the present application, it should be understood that the disclosed system, apparatus and method may be implemented in other ways.

For example, a division of the units or modules or components is only a division of logical functions. There may be other division manners in actual implementation. For example, multiple units or components may be combined or integrated into another system, or some units or modules or components may be ignored or not executed.

For another example, the units/modules/components described as separate/displayed parts may or may not be physically separate, that is, may be located in one position, or may be distributed on multiple network units. Some or all of the units/modules/components may be selected according to practical needs to achieve the purpose of the implementations of the present application.

Finally, it should be explained that mutual coupling or direct coupling or communication connection shown or discussed above may be indirect coupling or communication connection between the apparatuses or units through some interfaces, and may be in electrical, mechanical, or other forms.

What are described above are merely the specific implementation modes of implementations of the present application.

## Claims

1. A method (300) for reporting measurement information, applied to a terminal device in an idle state or an inactive state, comprising:
measuring, by the terminal device, signal quality of at least one cell (S310); and
reporting, by the terminal device, measurement information according to the signal quality of each cell in the at least one cell (S320);
wherein before measuring, by the terminal device, the signal quality of the at least one cell (S310), the method (300) further comprises:
receiving, by the terminal device, first indication information broadcasted by a network device; and
determining, by the terminal device, the at least one cell according to the first indication information;
**characterized in that** the first indication information comprises an identifier of at least one cell group to which the at least one cell belongs, an identifier of the at least one cell, a measurement frequency and a subcarrier spacing; wherein a cell group is a cell group in dual connection network architecture.

2. The method (300) of claim 1, wherein reporting, by the terminal device, the measurement information according to the signal quality of each cell in the at least one cell (S320) comprises:
determining, by the terminal device, a threshold value; and
generating, by the terminal device, the measurement information according to whether the signal quality of each cell meets the threshold value, and reporting the measurement information.

3. The method (300) of claim 2, wherein the measurement information comprises an identifier of a target cell group and/or an identifier of a target cell, each target cell group at least comprises one cell meeting the threshold value, and the target cell is a cell meeting the threshold value in the at least one cell.

4. The method (300) of claim 2 or 3, wherein before reporting, by the terminal device, the measurement information according to the signal quality of each cell in the at least one cell (S320), the method (300) further comprises:
receiving, by the terminal device, the threshold value broadcasted by the network device.

5. The method (300) of any one of claims 2 to 4, wherein the threshold value comprises:
a Reference Signal Received Power, RSRP, threshold and/or a Reference Signal Received Quality, RSRQ, threshold.

6. The method (300) of claim 1, wherein reporting, by the terminal device, the measurement information according to the signal quality of each cell in the at least one cell (S320) comprises:
reporting, by the terminal device, the signal quality of each cell to the network device according to an order of signal quality from high to low.

7. The method (300) of any one of claims 1 to 6, wherein reporting, by the terminal device, the measurement information according to the signal quality of each cell in the at least one cell (S320) comprises:
carrying, by the terminal device, the measurement information in a message 5, MSG5, and reporting the measurement information to the network device.

8. A method (400) for configuring a terminal device, comprising:
receiving, by a network device, measurement information sent by a terminal device (S410), wherein the measurement information is information generated by the terminal device in an idle state or an inactive state according to signal quality of each cell in at least one cell; and
configuring, by the network device, a secondary network device and/or a secondary serving cell for the terminal device according to the measurement information (S420);
wherein before receiving, by the network device, the measurement information sent by the terminal device (S410), the method (400) further comprises:
broadcasting, by the network device, first indication information to the terminal device in the idle state or the inactive state, wherein the first indication information is used by the terminal device to determine the at least one cell;
**characterized in that** the first indication information comprises an identifier of at least one cell group to which the at least one cell belongs, an identifier of the at least one cell, a measurement frequency and a subcarrier spacing; wherein a cell group is a cell group in dual connection network architecture.

9. The method (400) of claim 8, wherein before receiving, by the network device, the measurement information sent by the terminal device (S410), the method (400) further comprises:
broadcasting, by the network device, a threshold value to the terminal device, wherein the threshold value is used by the terminal device to generate the measurement information according to whether the signal quality of each cell meets the threshold value.

10. The method (400) of claim 9, wherein the measurement information comprises an identifier of a target cell group and/or an identifier of a target cell, each target cell group at least comprises one cell meeting a threshold value, and the target cell is a cell meeting the threshold value in the at least one cell.

11. The method (400) of claim 9 or 10, wherein the threshold value comprises:
a Reference Signal Received Power, RSRP, threshold and/or a Reference Signal Received Quality, RSRQ, threshold.

12. The method (400) of claim 8, wherein receiving, by the network device, the measurement information sent by the terminal device (S410) comprises:
receiving, by the network device, the signal quality of each cell reported by the terminal device according to an order of signal quality from high to low.

13. The method (400) of any one of claims 8 to 12, wherein receiving, by the network device, the measurement information sent by the terminal device (S410) comprises:
receiving, by the network device, the measurement information carried in a message 5, MSG5, sent by the terminal device.

14. A terminal device (500), wherein the terminal device is in an idle state or an inactive state, and the terminal device comprises:
a measuring unit (520), configured to measure a signal quality of at least one cell; and
a communication unit (510), configured to report measurement information according to the signal quality of each cell in the at least one cell;
wherein before the measuring unit (520) measures the signal quality of at least one cell, the communication unit (510) is further configured to receive first indication information broadcasted by a network device; and determine the at least one cell according to the first indication information;
**characterized in that** the first indication information comprises an identifier of at least one cell group to which the at least one cell belongs, an identifier of the at least one cell, a measurement frequency and a subcarrier spacing; wherein a cell group is a cell group in dual connection network architecture.

15. A network device (600), comprising:
a communication unit (610), configured to receive measurement information sent by a terminal device, wherein the measurement information is information generated by the terminal device in an idle state or an inactive state according to signal quality of each cell in at least one cell; and
a configuration unit (620), configured to configure a secondary network device and/or a secondary serving cell for the terminal device according to the measurement information;
wherein before receiving the measurement information sent by the terminal device, the communication unit (610) is further configured to broadcast first indication information to the terminal device in the idle state or an inactive state, wherein the first indication information is used by the terminal device to determine the at least one cell,
**characterized in that** the first indication information comprises an identifier of at least one cell group to which the at least one cell belongs, an identifier of the at least one cell, a measurement frequency and a subcarrier spacing; wherein a cell group is a cell group in dual connection network architecture.

16. A storage medium, for storing a computer program, wherein the computer program comprises instructions for executing the method of any one of claims 1 to 7.

17. A storage medium, for storing a computer program, wherein the computer program comprises instructions for executing the method of any one of claims 8 to 13.

18. A communication system (900), comprising:
a terminal device (910) in an idle state or an inactive state and a network device (920);
wherein the terminal device (910) is configured to: measure signal quality of at least one cell; and report measurement information according to the signal quality of each cell in the at least one cell; and
the network device (920) is configured to: receive the measurement information sent by the terminal device; and configure a secondary network device and/or a secondary serving cell for the terminal device according to the measurement information;
wherein before the terminal device (910) measures the signal quality of at least one cell, the terminal device (910) is further configured to receive first indication information broadcasted by the network device (920); and determine the at least one cell according to the first indication information;
before receiving the measurement information sent by the terminal device, the network device (920) is further configured to broadcast the first indication information to the terminal device (910) in the idle state or an inactive state;
**characterized in that** the first indication information comprises an identifier of at least one cell group to which the at least one cell belongs, an identifier of the at least one cell, a measurement frequency and a subcarrier spacing; wherein a cell group is a cell group in dual connection network architecture.

## Patentansprüche

1. Verfahren (300) zum Berichten von Messinformationen, angewandt auf eine Endgerätvorrichtung in einem Ruhezustand oder einem inaktiven Zustand, umfassend:
Messen, durch die Endgerätvorrichtung, einer Signalqualität mindestens einer Zelle (S310); und
Berichten, durch die Endgerätvorrichtung, von Messinformationen gemäß der Signalqualität jeder Zelle in der mindestens einen Zelle (S320);
wobei das Verfahren (300) vor dem Messen, durch die Endgerätvorrichtung, der Signalqualität der mindestens einen Zelle (S310) ferner umfasst:
Empfangen, durch die Endgerätvorrichtung, von durch eine Netzwerkvorrichtung rundgesendeten ersten Angabeinformationen; und
Bestimmen, durch die Endgerätvorrichtung, der mindestens einen Zelle gemäß den ersten Angabeinformationen;
**dadurch gekennzeichnet, dass** die ersten Angabeinformationen eine Kennung mindestens einer Zellengruppe, zu der die mindestens eine Zelle gehört, eine Kennung der mindestens einen Zelle, eine Messfrequenz und einen Hilfsträgerabstand umfassen; wobei eine Zellengruppe eine Zellengruppe in einer Dualverbindung-Netzwerkarchitektur ist.

2. Verfahren (300) nach Anspruch 1, wobei Berichten, durch die Endgerätvorrichtung, der Messinformationen gemäß der Signalqualität jeder Zelle in der mindestens einen Zelle (S320) umfasst:
Bestimmen, durch die Endgerätvorrichtung, eines Schwellenwerts; und
Erzeugen, durch die Endgerätvorrichtung, der Messinformationen je nachdem, ob die Signalqualität jeder Zelle dem Schwellenwert entspricht, und Berichten der Messinformationen.

3. Verfahren (300) nach Anspruch 2, wobei die Messinformationen eine Kennung einer Ziel-Zellengruppe und/oder eine Kennung einer Ziel-Zelle umfassen, jede Ziel-Zellengruppe mindestens eine Zelle umfasst, die dem Schwellenwert entspricht, und die Ziel-Zelle eine Zelle, die dem Schwellenwert entspricht, in der mindestens einen Zelle ist.

4. Verfahren (300) nach Anspruch 2 oder 3, wobei das Verfahren (300) vor dem Berichten, durch die Endgerätvorrichtung, der Messinformationen gemäß der Signalqualität jeder Zelle in der mindestens einen Zelle (S320) ferner umfasst:
Empfangen, durch die Endgerätvorrichtung, des durch die Netzwerkvorrichtung rundgesendeten Schwellenwerts.

5. Verfahren (300) nach einem der Ansprüche 2 bis 4, wobei der Schwellenwert umfasst:
einen Referenzsignal-Empfangsleistung- bzw. RSRP-Schwellenwert und/oder einen Referenzsignal-Empfangsqualität- bzw. RSRQ-Schwellenwert.

6. Verfahren (300) nach Anspruch 1, wobei Berichten, durch die Endgerätvorrichtung, der Messinformationen gemäß der Signalqualität jeder Zelle in der mindestens einen Zelle (S320) umfasst:
Berichten, durch die Endgerätvorrichtung, der Signalqualität jeder Zelle an die Netzwerkvorrichtung gemäß einer Reihenfolge der Signalqualität von hoch zu niedrig.

7. Verfahren (300) nach einem der Ansprüche 1 bis 6, wobei Berichten, durch die Endgerätvorrichtung, der Messinformationen gemäß der Signalqualität jeder Zelle in der mindestens einen Zelle (S320) umfasst:
Tragen, durch die Endgerätvorrichtung, der Messinformationen in einer Nachricht 5, MSG5, und Berichten der Messinformationen an die Netzwerkvorrichtung.

8. Verfahren (400) zum Konfigurieren einer Endgerätvorrichtung, umfassend:
Empfangen, durch eine Netzwerkvorrichtung, von durch eine Endgerätvorrichtung gesandten Messinformationen (S410), wobei die Messinformationen durch die Endgerätvorrichtung in einem Ruhezustand oder einem inaktiven Zustand gemäß einer Signalqualität jeder Zelle in der mindestens einen Zelle erzeugte Informationen sind; und
Konfigurieren, durch die Netzwerkvorrichtung, einer sekundären Netzwerkvorrichtung und/oder einer sekundären Versorgungszelle für die Endgerätvorrichtung gemäß den Messinformationen (S420);
wobei das Verfahren (400) vor dem Empfangen, durch die Netzwerkvorrichtung, der durch die Endgerätvorrichtung gesandten Messinformationen (S410), ferner umfasst:
Rundsenden, durch die Netzwerkvorrichtung, von ersten Angabeinformationen an die Endgerätvorrichtung in dem Ruhezustand oder dem inaktiven Zustand, wobei die ersten Angabeinformationen durch die Endgerätvorrichtung verwendet werden, die mindestens eine Zelle zu bestimmen;
**dadurch gekennzeichnet, dass** die ersten Angabeinformationen eine Kennung mindestens einer Zellengruppe, zu der die mindestens eine Zelle gehört, eine Kennung der mindestens einen Zelle, eine Messfrequenz und einen Hilfsträgerabstand umfassen; wobei eine Zellengruppe eine Zellengruppe in einer Dualverbindung-Netzwerkarchitektur ist.

9. Verfahren (400) nach Anspruch 8, wobei das Verfahren (400) vor dem Empfangen, durch die Netzwerkvorrichtung, der durch die Endgerätvorrichtung gesandten Messinformationen (S410) ferner umfasst:
Rundsenden, durch die Netzwerkvorrichtung, eines Schwellenwerts an die Endgerätvorrichtung, wobei der Schwellenwert durch die Endgerätvorrichtung verwendet wird, die Messinformationen je nachdem, ob die Signalqualität jeder Zelle dem Schwellenwert entspricht, zu erzeugen.

10. Verfahren (400) nach Anspruch 9, wobei die Messinformationen eine Kennung einer Ziel-Zellengruppe und/oder eine Kennung einer Ziel-Zelle umfassen, jede Ziel-Zellengruppe mindestens eine Zelle, die einem Schwellenwert entspricht, umfasst, und die Ziel-Zelle eine Zelle, die dem Schwellenwert entspricht, in der mindestens einen Zelle ist.

11. Verfahren (400) nach Anspruch 9 oder 10, wobei der Schwellenwert umfasst:
einen Referenzsignal-Empfangsleistung- bzw. RSRP-Schwellenwert und/oder einen Referenzsignal-Empfangsqualität- bzw. RSRQ-Schwellenwert.

12. Verfahren (400) nach Anspruch 8, wobei Empfangen, durch die Netzwerkvorrichtung, der durch die Endgerätvorrichtung gesandten Messinformationen (S410) umfasst:
Empfangen, durch die Netzwerkvorrichtung, der durch die Endgerätvorrichtung gemäß einer Reihenfolge der Signalqualität von hoch zu niedrig berichteten Signalqualität jeder Zelle.

13. Verfahren (400) nach einem der Ansprüche 8 bis 12, wobei Empfangen, durch die Netzwerkvorrichtung, der durch die Endgerätvorrichtung gesandten Messinformationen (S410) umfasst:
Empfangen, durch die Netzwerkvorrichtung, der in einer durch die Endgerätvorrichtung gesandten Nachricht 5, MSG5, getragenen Messinformationen.

14. Endgerätvorrichtung (500), wobei die Endgerätvorrichtung in einem Ruhezustand oder einem inaktiven Zustand ist und die Endgerätvorrichtung umfasst:
eine Messeinheit (520), konfiguriert zum Messen einer Signalqualität mindestens einer Zelle; und
eine Kommunikationseinheit (510), konfiguriert zum Berichten von Messinformationen gemäß der Signalqualität jeder Zelle in der mindestens einen Zelle;
wobei, bevor die Messeinheit (520) die Signalqualität mindestens einer Zelle misst, die Kommunikationseinheit (510) ferner konfiguriert ist zum Empfangen von durch eine Netzwerkvorrichtung rundgesendeten ersten Angabeinformationen; und Bestimmen der mindestens einen Zelle gemäß den ersten Angabeinformationen;
**dadurch gekennzeichnet, dass** die ersten Angabeinformationen eine Kennung mindestens einer Zellengruppe, zu der die mindestens eine Zelle gehört, eine Kennung der mindestens einen Zelle, eine Messfrequenz und einen Hilfsträgerabstand umfassen; wobei eine Zellengruppe eine Zellengruppe in einer Dualverbindung-Netzwerkarchitektur ist.

15. Netzwerkvorrichtung (600), umfassend:
eine Kommunikationseinheit (610), konfiguriert zum Empfangen von durch eine Endgerätvorrichtung gesandten Messinformationen, wobei die Messinformationen durch die Endgerätvorrichtung in einem Ruhezustand oder einem inaktiven Zustand gemäß einer Signalqualität jeder Zelle in der mindestens einen Zelle erzeugte Informationen sind; und
eine Konfigurationseinheit (620), konfiguriert zum Konfigurieren einer sekundären Netzwerkvorrichtung und/oder einer sekundären Versorgungszelle für die Endgerätvorrichtung gemäß den Messinformationen;
wobei die Kommunikationseinheit (610) vor dem Empfangen der durch die Endgerätvorrichtung gesandten Messinformationen ferner konfiguriert ist zum Rundsenden von ersten Angabeinformationen an die Endgerätvorrichtung in dem Ruhezustand oder einem inaktiven Zustand, wobei die ersten Angabeinformationen durch die Endgerätvorrichtung verwendet werden, die mindestens eine Zelle zu bestimmen,
**dadurch gekennzeichnet, dass** die ersten Angabeinformationen eine Kennung mindestens einer Zellengruppe, zu der die mindestens eine Zelle gehört, eine Kennung der mindestens einen Zelle, eine Messfrequenz und einen Hilfsträgerabstand umfassen; wobei eine Zellengruppe eine Zellengruppe in einer Dualverbindung-Netzwerkarchitektur ist.

16. Speichermedium zum Speichern eines Computerprogramms, wobei das Computerprogramm Anweisungen zum Ausführen des Verfahrens nach einem der Ansprüche 1 bis 7 umfasst.

17. Speichermedium zum Speichern eines Computerprogramms, wobei das Computerprogramm Anweisungen zum Ausführen des Verfahrens nach einem der Ansprüche 8 bis 13 umfasst.

18. Kommunikationssystem (900), umfassend:
eine Endgerätvorrichtung (910) in einem Ruhezustand oder einem inaktiven Zustand und eine Netzwerkvorrichtung (920) ;
wobei die Endgerätvorrichtung (910) konfiguriert ist zum: Messen einer Signalqualität mindestens einer Zelle; und Berichten von Messinformationen gemäß der Signalqualität jeder Zelle in der mindestens einen Zelle; und
die Netzwerkvorrichtung (920) konfiguriert ist zum: Empfangen der durch die Endgerätvorrichtung gesandten Messinformationen; und Konfigurieren einer sekundären Netzwerkvorrichtung und/oder einer sekundären Versorgungszelle für die Endgerätvorrichtung gemäß den Messinformationen;
wobei die Endgerätvorrichtung (910), bevor die Endgerätvorrichtung (910) die Signalqualität mindestens einer Zelle misst, ferner konfiguriert ist zum Empfangen von durch die Netzwerkvorrichtung (920) rundgesendeten ersten Angabeinformationen; und Bestimmen der mindestens einen Zelle gemäß den ersten Angabeinformationen;
die Netzwerkvorrichtung (920) vor dem Empfangen der durch die Endgerätvorrichtung gesandten Messinformationen ferner konfiguriert ist zum Rundsenden der ersten Angabeinformationen an die Endgerätvorrichtung (910) in dem Ruhezustand oder einem inaktiven Zustand;
**dadurch gekennzeichnet, dass** die ersten Angabeinformationen eine Kennung mindestens einer Zellengruppe, zu der die mindestens eine Zelle gehört, eine Kennung der mindestens einen Zelle, eine Messfrequenz und einen Hilfsträgerabstand umfassen; wobei eine Zellengruppe eine Zellengruppe in einer Dualverbindung-Netzwerkarchitektur ist.

## Revendications

1. Procédé (300) de rapport d'informations de mesure, appliqué à un dispositif terminal en état de repos ou d'inactivité, comprenant :
la mesure, par le dispositif terminal, d'une qualité du signal d'au moins une cellule (S310) ; et
le rapport, par le dispositif terminal, d'informations de mesure en fonction de la qualité de signal de chaque cellule dans l'au moins une cellule (S320) ;
le procédé (300) comprenant en outre, avant la mesure, par le dispositif terminal, de la qualité du signal de l'au moins une cellule (S310) :
la réception, par le dispositif terminal, de premières informations d'indication diffusées par un dispositif de réseau ; et
la détermination, par le dispositif terminal, de l'au moins une cellule en fonction des premières informations d'indication ;
**caractérisé en ce que** les premières informations d'indication comprennent un identifiant d'au moins un groupe de cellules auquel appartient l'au moins une cellule, un identifiant de l'au moins une cellule, une fréquence de mesure et un espacement de sous-porteuses ; un groupe de cellules étant un groupe de cellules dans une architecture de réseau à double connexion.

2. Procédé (300) selon la revendication 1, dans lequel le rapport, par le dispositif terminal, des informations de mesure en fonction de la qualité du signal de chaque cellule dans l'au moins une cellule (S320) comprend :
la détermination, par le dispositif terminal, d'une valeur seuil ; et
la génération, par le dispositif terminal, des informations de mesure selon que la qualité de signal de chaque cellule atteint ou non la valeur seuil, et le rapport des informations de mesure.

3. Procédé (300) selon la revendication 2, dans lequel les informations de mesure comprennent un identifiant d'un groupe de cellules cible et/ou un identifiant d'une cellule cible, chaque groupe de cellules cible comprend au moins une cellule satisfaisant la valeur seuil, et la cellule cible est une cellule satisfaisant la valeur seuil dans l'au moins une cellule.

4. Procédé (300) selon la revendication 2 ou 3, le procédé (300) comprenant en outre, avant le rapport, par le dispositif terminal, des informations de mesure en fonction de la qualité de signal de chaque cellule dans l'au moins une cellule (S320) :
la réception, par le dispositif terminal, de la valeur seuil diffusée par le dispositif de réseau.

5. Procédé (300) selon l'une quelconque des revendications 2 à 4, dans lequel la valeur seuil comprend :
un seuil de puissance reçue de signal de référence, RSRP, et/ou un seuil de qualité reçue de signal référence, RSRQ.

6. Procédé (300) selon la revendication 1, dans lequel le rapport, par le dispositif terminal, des informations de mesure en fonction de la qualité de signal de chaque cellule dans l'au moins une cellule (S320) comprend :
le rapport, par le dispositif terminal, de la qualité de signal de chaque cellule au dispositif de réseau en fonction d'un ordre de qualité de signal allant de la plus haute à la plus basse.

7. Procédé (300) selon l'une quelconque des revendications 1 à 6, dans lequel le rapport, par le dispositif terminal, des informations de mesure en fonction de la qualité de signal de chaque cellule de l'au moins une cellule (S320) comprend :
la transmission, par le dispositif terminal, des informations de mesure dans un message 5, MSG5, et du rapport des informations de mesure au dispositif de réseau.

8. Procédé (400) de configuration d'un dispositif terminal, comprenant :
la réception, par un dispositif de réseau, d'informations de mesure envoyées par un dispositif terminal (S410), les informations de mesure étant des informations générées par le dispositif terminal en état de repos ou d'inactivité en fonction d'une qualité de signal de chaque cellule dans l'au moins une cellule ; et
la configuration, par le dispositif de réseau, d'un dispositif de réseau secondaire et/ou d'une cellule de desserte secondaire pour le dispositif terminal en fonction des informations de mesure (S420) ;
le procédé (400) comprenant en outre, avant la réception, par le dispositif réseau, des informations de mesure envoyées par le dispositif terminal (S410) :
la diffusion, par le dispositif de réseau, de premières informations d'indication au dispositif terminal en état de repos ou d'inactivité, les premières informations d'indication étant utilisées par le dispositif terminal pour déterminer l'au moins une cellule ;
**caractérisé en ce que** les premières informations d'indication comprennent un identifiant d'au moins un groupe de cellules auquel appartient l'au moins une cellule, un identifiant d'au moins une cellule, une fréquence de mesure et un espacement de sous-porteuses ; un groupe de cellules étant un groupe de cellules dans une architecture de réseau à double connexion.

9. Procédé (400) selon la revendication 8, le procédé (400) comprenant en outre, avant la réception, par le dispositif réseau, des informations de mesure envoyées par le dispositif terminal (S410) :
la diffusion, par le dispositif réseau, d'une valeur seuil au dispositif terminal, la valeur seuil étant utilisée par le dispositif terminal pour générer les informations de mesure selon que la qualité de signal de chaque cellule satisfait ou non la valeur seuil.

10. Procédé (400) selon la revendication 9, dans lequel les informations de mesure comprennent un identifiant d'un groupe de cellules cible et/ou un identifiant d'une cellule cible, chaque groupe de cellules cible comprend au moins une cellule satisfaisant une valeur seuil, et la cellule cible est une cellule satisfaisant la valeur seuil dans l'au moins une cellule.

11. Procédé (400) selon la revendication 9 ou 10, dans lequel la valeur seuil comprend :
un seuil de puissance reçue de signal de référence, RSRP, et/ou un seuil de qualité reçue de signal de référence, RSRQ.

12. Procédé (400) selon la revendication 8, dans lequel la réception, par le dispositif réseau, des informations de mesure envoyées par le dispositif terminal (S410) comprend :
la réception, par le dispositif de réseau, de la qualité de signal de chaque cellule rapportée par le dispositif terminal selon un ordre de qualité de signal allant de la plus haute à la plus basse.

13. Procédé (400) selon l'une quelconque des revendications 8 à 12, dans lequel la réception, par le dispositif de réseau, des informations de mesure envoyées par le dispositif terminal (S410) comprend :
la réception, par le dispositif de réseau, des informations de mesure transmises dans un message 5, MSG5, envoyé par le dispositif terminal.

14. Dispositif terminal (500), le dispositif terminal étant en état de repos ou d'inactivité, et le dispositif terminal comprenant :
une unité de mesure (520), configurée pour mesurer une qualité de signal d'au moins une cellule ; et
une unité de communication (510), configurée pour communiquer des informations de mesure en fonction de la qualité de signal de chaque cellule dans l'au moins une cellule ;
dans lequel, avant que l'unité de mesure (520) ne mesure la qualité de signal d'au moins une cellule, l'unité de communication (510) est configurée pour recevoir des premières informations d'indication diffusées par un dispositif de réseau ; et déterminer l'au moins une cellule en fonction des premières informations d'indication ;
**caractérisé en ce que** les premières informations d'indication comprennent un identifiant d'au moins un groupe de cellules auquel appartient l'au moins une cellule, un identifiant de l'au moins une cellule, une fréquence de mesure et un espacement de sous-porteuses ; un groupe de cellules étant un groupe de cellules dans une architecture de réseau à double connexion.

15. Dispositif de réseau (600) comprenant :
une unité de communication (610), configurée pour recevoir des informations de mesure envoyées par un dispositif terminal, les informations de mesure étant des informations générées par le dispositif terminal en état de repos ou d'inactivité en fonction de la qualité de signal de chaque cellule dans l'au moins une cellule ; et
une unité de configuration (620), configurée pour configurer un dispositif de réseau secondaire et/ou une cellule de desserte secondaire pour le dispositif terminal en fonction des informations de mesure ;
dans lequel, avant de recevoir les informations de mesure envoyées par le dispositif terminal, l'unité de communication (610) est configurée en outre pour diffuser des premières informations d'indication au dispositif terminal en état de repos ou d'inactivité, les premières informations d'indication étant utilisées par le dispositif terminal pour déterminer l'au moins une cellule,
**caractérisé en ce que** les premières informations d'indication comprennent un identifiant d'au moins un groupe de cellules auquel appartient l'au moins une cellule, un identifiant de l'au moins une cellule, une fréquence de mesure et un espacement de sous-porteuses ; un groupe de cellules étant un groupe de cellules dans une architecture de réseau à double connexion.

16. Support de stockage, destiné à stocker un programme d'ordinateur, le programme d'ordinateur comprenant des instructions pour exécuter le procédé selon l'une quelconque des revendications 1 à 7.

17. Support de stockage, destiné à stocker un programme d'ordinateur, le programme d'ordinateur comprenant des instructions pour exécuter le procédé selon l'une quelconque des revendications 8 à 13.

18. Système de communication (900) comprenant :
un dispositif terminal (910) en état de repos ou d'inactivité et un dispositif de réseau (920) ;
dans lequel le dispositif terminal (910) est configuré pour : mesurer une qualité de signal d'au moins une cellule ; et rapporter des informations de mesure en fonction de la qualité de signal de chaque cellule dans l'au moins une cellule ; et
le dispositif de réseau (920) est configuré pour : recevoir les informations de mesure envoyées par le dispositif terminal ; et configurer un dispositif de réseau secondaire et/ou une cellule de desserte secondaire pour le dispositif terminal en fonction des informations de mesure ;
dans lequel, avant que le dispositif terminal (910) ne mesure la qualité de signal d'au moins une cellule, le dispositif terminal (910) est configuré en outre pour recevoir des premières informations d'indication diffusées par le dispositif de réseau (920) ; et déterminer l'au moins une cellule en fonction des premières informations d'indication ;
avant de recevoir les informations de mesure envoyées par le dispositif terminal, le dispositif de réseau (920) est configuré pour diffuser les premières informations d'indication au dispositif terminal (910) en état de repos ou d'inactivité ;
**caractérisé en ce que** les premières informations d'indication comprennent un identifiant d'au moins un groupe de cellules auquel appartient l'au moins une cellule, un identifiant de l'au moins une cellule, une fréquence de mesure et un espacement dessous-porteuses ; dans lequel un groupe de cellules est un groupe de cellules dans une architecture de réseau à double connexion.
